# EUROPEAN PATENT SPECIFICATION

(11) **EP 2 058 164 B1**
(45) Date of publication and mention of the grant of the patent: **09.07.2014**
(21) Application number: 08075868.3
(22) Date of filing: 10.11.2008
(51) Int. Cl.: B60N 2/28

(54) **Child vehicle seat**
Kindersitz
Siège pour enfant

(30) Priority: 12.11.2007 NL 1034675
(43) Date of publication of application: 13.05.2009
(73) Proprietor: Maxi Miliaan B.V., 5704 RD Helmond (NL)
(72) Inventor: Mostert, Marc, 6131 BL Sittard (NL); Wouters, Vincent Arnoud, 5707 NG Helmond (NL); Van Diepen, Paulus Adrianus Jacobus, 2512 ET The Hague (NL)
(74) Representative: Veldman-Dijkers, Cornelia G. C.

(56) References cited:
- EP-A- 1 002 693
- EP-A- 1 717 096
- GB-A- 2 362 094
- NL-A- 9 400 114

## Description

The invention relates to a child vehicle seat comprising at least a seat portion, a backrest which joins said seat portion and at least one guide present on one side of the seat portion, which child vehicle seat is placed on the vehicle seat with the seat portion of the child vehicle seat facing towards a vehicle seat backrest in use, after which the child vehicle seat is secured in place by means of a three-point seat belt comprising a shoulder portion and a lap portion, which is passed at least over said guide.

Such a child vehicle seat, which is for example known from European patent application EP-A1-1 211 124 , is suitable for relatively small children, who are to be transported "facing backwards" in a vehicle. The term "facing backwards" is understood to mean that a child seated in the child vehicle seat faces in a direction opposite the direction of travel.

To mount such a child vehicle seat in place, the child vehicle seat is placed on the seat portion of the vehicle seat, with the seat portion of the child vehicle seat facing towards the vehicle seat backrest and the backrest of the child vehicle seat being located on a side remote from the vehicle seat backrest. Following that, the child vehicle seat is connected to the vehicle seat by means of a three-point seat belt that is present in the vehicle. To that end, the shoulder portion of the three-point vehicle belt must usually be passed along the side of the backrest remote from the seat portion, whilst the lap portion is passed along guides disposed on either side of the seat portion. The child vehicle seat is thus securely connected to the vehicle seat.

In practice, however, it has been found that it is not always obvious to all users that the three-point belt must be arranged over the child vehicle seat in this manner. In particular users who have no experience connecting a child vehicle seat to a vehicle seat, for example because the user in question has only just purchased such a child vehicle seat or it has been some time since the user last used the child vehicle seat, mistakes appear to be made in correctly connecting the three-point belt. In most cases, the shoulder portion is not passed along the rear side of the backrest but along the guides disposed on either side of the seat portion. The child vehicle seat is not correctly connected to the vehicle seat in that case, so that the child vehicle seat may become detached from the three-point belt in case of a collision of the vehicle or make an undesirable movement relative to the child vehicle seat.

The object of the invention is to provide a child vehicle seat in which the fact that the shoulder portion is incorrectly positioned is communicated to the user in a simple manner.

This object is accomplished with the child vehicle seat according to the invention in that the guide is oriented at such an angle relative to the child vehicle seat that the shoulder portion will slide off the guide upon being arranged along the guide whilst the lap portion can firmly engage the guide upon being arranged along the guide.

When the lap portion is correctly arranged along the guide, the child vehicle seat will be securely connected to the vehicle seat by means of the lap portion. When a user arranges the shoulder portion along the guide, however, the shoulder portion will slide off the guide on account of the angle at which the guide extends relative to the child vehicle seat, which signals to the user that the three-point belt is not correctly arranged. The user will arrange the three-point belt correctly over the child vehicle seat yet in that case and connect it thereto.

It is noted that from EP-A2-1717 096 there is known a child vehicle seat in which a belt receiving structure 8 is arranged between a seat portion 3 and a base 2. During normal use, the lap portion of the belt abuts against said belt receiving structure 8. When a user positions the should belt portion against the belt receiving structure 8, however, the shoulder portion will remain in abutment therewith, inter alia because the back portion 4 extends a relatively large horizontal distance beyond the belt receiving structure in a direction away from the vehicle seat backrest. The shoulder portion will not slide off the belt receiving structure.

It is noted that from NL 9400114 there is known a child vehicle seat in which engagement points 8 are present on either side of the seat portion. Each engagement point 8 holds a belt portion provided therein in place along both longitudinal sides thereof. A shoulder portion will be securely positioned in the engagement point 8 and will not slide off the engagement point 8. This is clearly shown in figure 2 of said Dutch patent application.

One embodiment of the child vehicle seat according to the invention is characterised in that the guide includes an obtuse angle with a surface extending transversely to the backrest.

It has been found that the shoulder portion will readily slide off the guide when such an obtuse angle is used.

Another embodiment of the child vehicle seat according to the invention is characterised in that said obtuse angle is 95 - 115 degrees.

When an obtuse angle of this magnitude is used, the shoulder portion will readily slide off the guide, whilst a lap portion passed over said guide can be securely connected to the guide and thus to the child vehicle seat.

Yet another embodiment of the child vehicle seat according to the invention is characterised in that the guide will include an angle of 60 - 80 degrees with the horizontal when the child vehicle seat is placed on a horizontal surface.

It has been found that, in use, when such an angle relative to the horizontal is used and the child vehicle seat is placed on a vehicle seat portion that is inclined towards the vehicle seat backrest, an angle of the guide is obtained such that the shoulder portion will readily slide off the guide, whilst the lap portion can firmly engage the guide.

Yet another embodiment of the child vehicle seat according to the invention is characterised in that the child vehicle seat is provided with such a guide on either side of the seat portion.

In this way the child vehicle seat can be placed on a vehicle seat provided with a three-point belt that extends from the left-hand side of the vehicle seat to the right-hand side thereof.

Yet another embodiment of the child vehicle seat according to the invention is characterised in that said guide comprises a flat surface against which the lap portion abuts in use.

The shoulder portion can readily slide off the guide along such a flat surface.

The invention will now be explained in more detail with reference to the drawings, in which:
Figure 1 is a perspective view of a child vehicle seat according to the prior art placed on a vehicle seat, in which a three-point belt is incorrectly used;
Figure 2 is a cross-sectional view of a child vehicle seat according to the invention;
Figure 3 is a perspective view of the child vehicle seat according to the invention shown in figure 2, which is placed on a vehicle seat, with the three-point belt correctly connected;
Figures 4 and 5 are perspective views of the child vehicle seat according to the invention shown in figure 2, in which the three-point belt is (being) incorrectly connected.

Like parts are indicated by the same numerals in the figures.

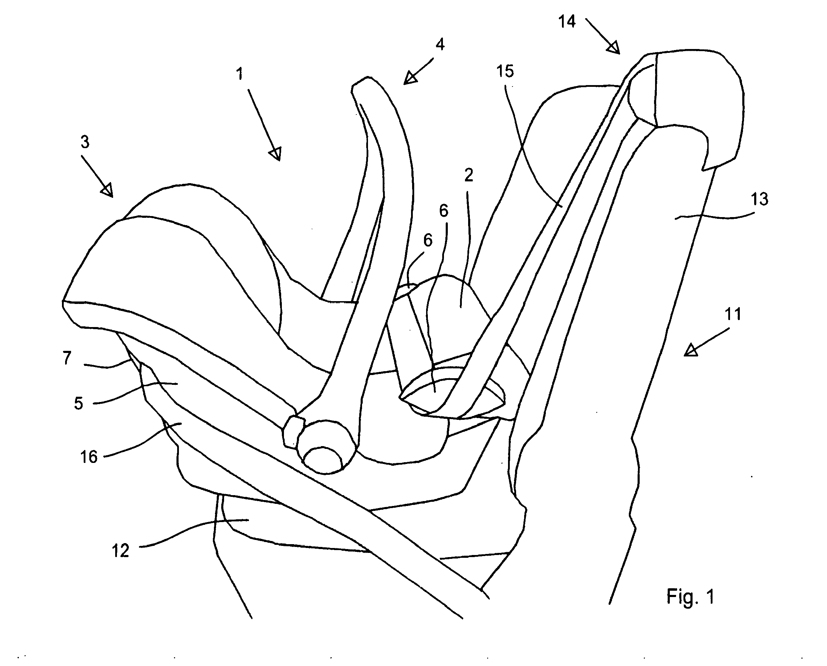

Figure 1 shows a child vehicle seat 1 comprising a seat portion 2, a backrest 3 which joins said seat portion and a carrying bracket 4, which is pivotally connected to the bucket 5 comprising the seat portion 2 and the backrest 3 on either side thereof. The child vehicle seat 1 further comprises two guides 6 disposed on either side of the seat portion 2. If desired, the bucket 5 may be provided with a hook-shaped guide member 7 on a side of the backrest 3 remote from the seat portion 2. The child vehicle seat 1 is placed on a vehicle seat 11, which usually comprises a seat portion 12 and a backrest 13 which joins said seat portion. The vehicle seat 11 is furthermore usually provided with a three-point belt 14 comprising a shoulder portion 15 and a lap portion 16. The shoulder portion 15 is understood to be that part of the three-point belt 14 which extends from an upper side of the vehicle seat backrest 13 towards a belt buckle (not shown) present near the transition between the seat portion 12 of the vehicle seat and the vehicle seat backrest 13. The lap portion 16 extends towards the belt buckle from the same side of the vehicle seat 11 as the shoulder portion 15, but in this case from a bottom side of the vehicle seat backrest 13 rather than from the upper side thereof. Such a three-point belt 14 is known per se and will not be explained in more detail therein, therefore.

To mount the child vehicle seat 1 correctly to the vehicle seat 11, the shoulder portion 15 must be passed over the bucket 5 and through the hook-shaped guide member 7 in the direction of the belt buckle. The lap portion 16 must be passed under the guides 6. In the situation shown in figure 1, the three-point belt 14 is incorrectly provided. The lap portion 16 is passed over the bucket 5, whilst the shoulder portion 15 is passed along the guides 6. In such a situation the child vehicle seat 1 is not connected to the vehicle seat 11 in the prescribed, safe manner, so that in case of a collision the vehicle seat 1 may become detached or move undesirably with respect to the vehicle seat 11, which may lead to the child seated in a child vehicle seat 1 being injured.

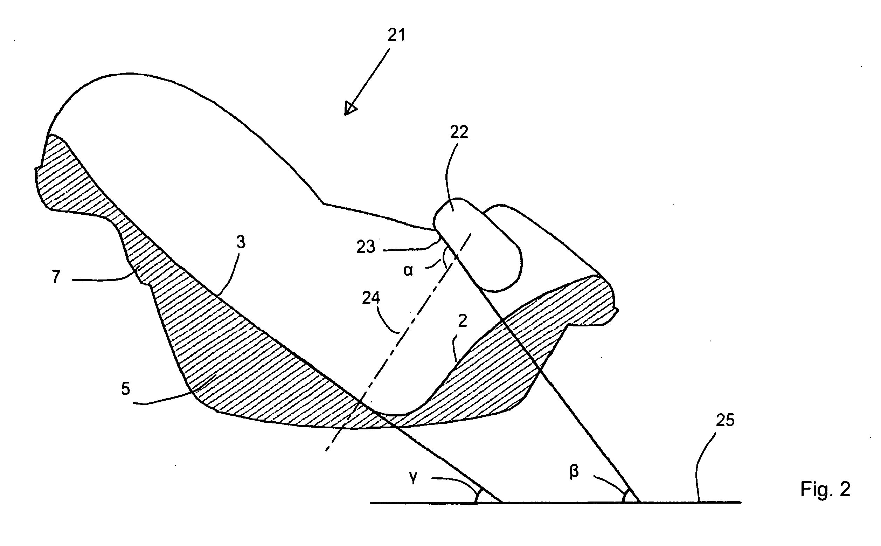

Figure 2 is a cross-sectional view of a child vehicle seat 21 according to the invention, whose bucket 5 corresponds to the bucket 5 of the child vehicle seat 1 shown in figure 1. Like the child vehicle seat 1, the child vehicle seat 21 may be provided with a carrying bracket 4. The child vehicle seat 21 is different from the child vehicle 1 that is known per se in that the child vehicle seat 21 is provided with guides 22 disposed on either side of the seat portion 2, which guides each have a flat guide surface 23. Each guide surface 23 includes an obtuse angle α with a virtual surface 24 extending transversely to the backrest 3. Said obtuse angle α is 95 - 115 degrees.

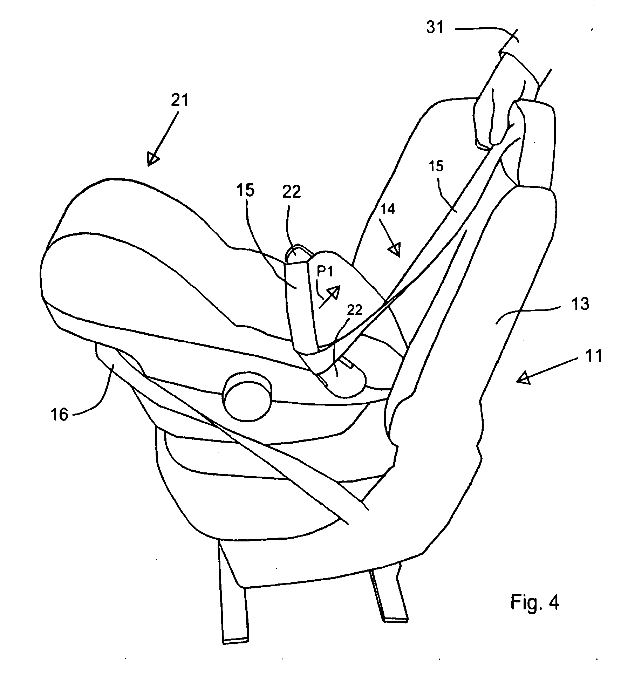

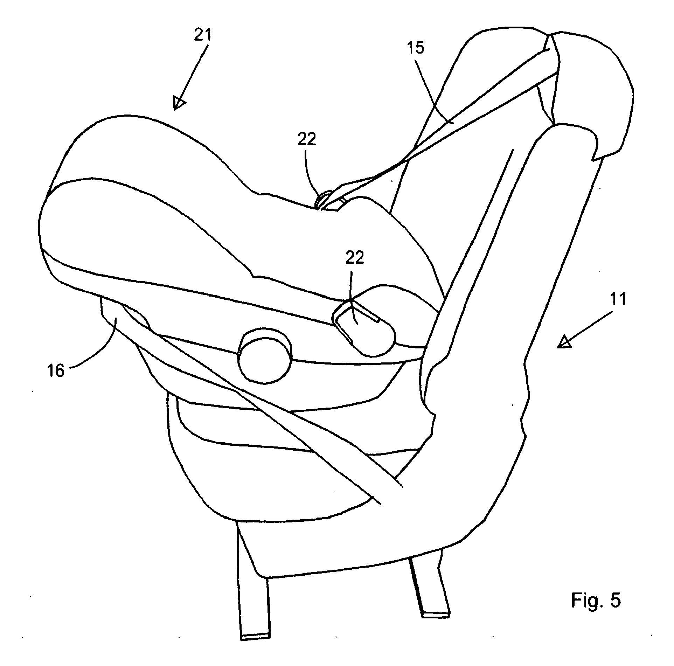

If the child vehicle seat 21 is placed on a horizontal surface 25, it is also possible to determine the angle β which the surface 23 includes with the horizontal. The angle β is preferably 60-80 degrees. The angle γ which the backrest 3 includes with the horizontal 25 is preferably 45 - 60 degrees. The angle which the guide surface 23 includes with the child vehicle seat 21 may also have a different magnitude, as long as the guide surface 23 of the guide 22 is positioned in such a manner that, as will be explained in more detail with reference to figures 4 and 5, the shoulder portion 15 will slide off at least one of the guides 22 if it is accidentally arranged along the guides 22, so that the person who is placing the child vehicle seat 1 on the vehicle seat 11 will be alerted to the fact that the three-point belt 14 is incorrectly connected to the child vehicle seat 1.

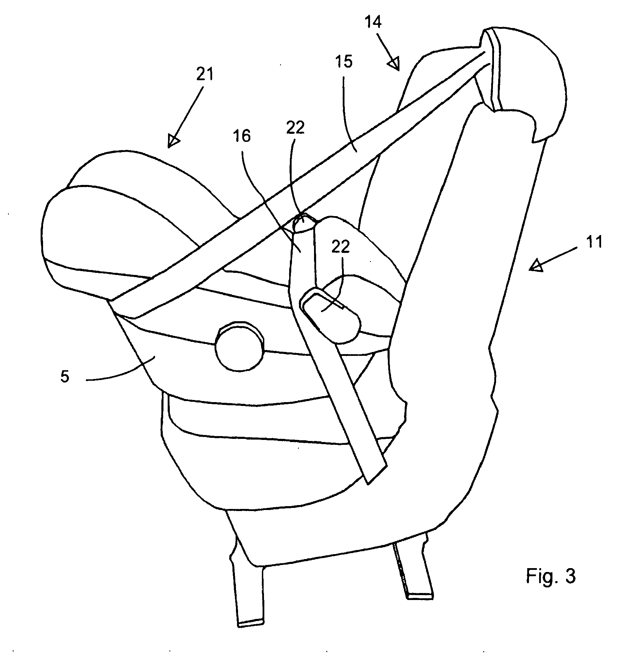

Figure 3 is a perspective view of the child vehicle seat 21 according to the invention, which is placed on a vehicle seat 11 and which is correctly connected thereto by means of a three-point belt 14. The term "correctly" as used in this context means that the shoulder portion 15 extends along a side of the backrest 3 remote from the seat portion 2, whilst the lap portion 15 is passed along the guides 22. In this way the child vehicle seat 22 is securely connected to the vehicle seat 11. The guide surface 23, and consequently the child vehicle seat 21, is drawn tightly against the vehicle seat 11 by tensioning the three-point belt 14.

In figures 4 and 5, which show the child vehicle seat 21 according to the invention, the three-point belt 14 is being incorrectly arranged around the child vehicle seat 21 by a user 31. The user 31 passes the lap portion 16 around the bucket 5 and arranges the shoulder portion 15 against the guide surface 23 of the guides 22 (see figure 4). As soon as the three-point belt 14 is tensioned by the user 31 or by an automatic belt retractor as known per se, the shoulder portion 15 will slide off the guide 22 in the direction indicated by the arrow P1. This happens on account of the angle at which the guide 22 is oriented relative to the child vehicle seat 21. In this way the shoulder portion 15 will in any case slide off the guide 21 that is present on the side of the vehicle seat 11 where the shoulder portion 15 is located near the upper side of the vehicle seat backrest with one end and the lap portion 16 is located near a bottom side of the vehicle seat backrest.

As soon as the shoulder portion 15 moves off the guide 22, the shoulder portion 15 will take up the position shown in figure 5, for example, in which position the shoulder portion 15 only abuts against the other guide 22. It should be obvious to a user that in this way the child vehicle seat 21 is not correctly connected to the vehicle seat 11. The user 31 will then disconnect the three-point belt 14 and connect it to the child vehicle seat 21 in the correct manner shown in figure 3.

There is also a possibility that the shoulder portion 15 will slide off both guides 22.

## Claims

1. A child vehicle seat (21) comprising at least a seat portion (2), a backrest (3) which joins said seat portion (2) and at least one guide (22) present on one side of the seat portion (2), which child vehicle seat (21) is placed on the vehicle seat (11) with the seat portion (2) of the child vehicle seat (21) facing towards a vehicle seat backrest (13) in use, after which the child vehicle seat (21) is secured in place by means of a three-point seat belt (14) comprising a shoulder portion (15) and a lap portion (16), which is passed at least over said guide (22), **characterised in that** the guide (22) is oriented at such an angle relative to the child vehicle seat (21) that the shoulder portion (15) will slide off the guide (22) upon being arranged along the guide (22)) whilst the lap portion (16) can firmly engage the guide (22) upon being arranged along the guide (22).

2. A child vehicle seat (21) according to claim 1, **characterised in that** the guide (22) includes an obtuse angle (α) with a surface (24) extending transversely to the backrest (3).

3. A child vehicle seat (21) according to claim 2, **characterised in that** said obtuse angle (α) is 95 - 115 degrees.

4. A child vehicle seat (21) according to any one of the preceding claims" **characterised in that** the guide (22) will include an angle (β) of 60-80 degrees with the horizontal (25) when the child vehicle seat (21) is placed on a horizontal surface.

5. A child vehicle seat (21) according to any one of the preceding claims" **characterised in that** the child vehicle seat (21) is provided with such a guide (22) on either side of the seat portion (2).

6. A child vehicle seat (21) according to any one of the preceding claims" **characterised in that** said guide (22) comprises a flat surface (23) against which the lap portion (16) abuts in use.

## Patentansprüche

1. Fahrzeugkindersitz (21) mit wenigstens einem Sitzteil (2), einer Rückenlehne (3), die sich an das Sitzteil (2) anschließt, und mindestens einer auf einer Seite des Sitzteils (2) vorhandenen Führung (22), wobei der Fahrzeugkindersitz (21) so auf dem Fahrzeugsitz (11) platziert wird, dass das Sitzteil (2) des Fahrzeugkindersitzes (21) der verwendeten Fahrzeugsitz-Rückenlehne (13) zugewandt ist, wonach der Fahrzeugkindersitz (21) mit Hilfe eines Dreipunkt-Sicherheitsgurtes (14), der einen Schulterabschnitt (15) und ein Beckenteil (16) umfasst und der zumindest über die Führung (22) geführt wird, auf seinem Platz befestigt wird,
**dadurch gekennzeichnet, dass** die Führung (22) in einem solchen Winkel relativ zu dem Fahrzeugkindersitz (21) ausgerichtet ist, dass der Schulterabschnitt (15) von der Führung (22) abrutscht, wenn er längs der Führung (22) angelegt wird, während das Beckenteil (16) beim Anbringen längs der Führung (22) fest in die Führung (22) eingreifen kann.

2. Fahrzeugkindersitz (21) nach Anspruch 1, **dadurch gekennzeichnet, dass** die Führung (22) einen stumpfen Winkel (α) mit einer Oberfläche (24) bildet, die quer zur Rückenlehne (3) verläuft.

3. Fahrzeugkindersitz (21) nach Anspruch 2, **dadurch gekennzeichnet, dass** der stumpfe Winkel (α) 95 bis 115 Grad beträgt.

4. Fahrzeugkindersitz (21) nach einem der vorhergehenden Ansprüche, **dadurch gekennzeichnet, dass** die Führung (22) einen Winkel (β) von 60 bis 80 Grad mit der Horizontalen (25) bildet, wenn der Fahrzeugkindersitz (21) auf einer horizontalen Oberfläche platziert wird.

5. Fahrzeugkindersitz (21) nach einem der vorhergehenden Ansprüche, **dadurch gekennzeichnet, dass** der Fahrzeugkindersitz (21) auf beiden Seiten des Sitzteils (2) mit einer derartigen Führung (22) versehen ist.

6. Fahrzeugkindersitz (21) nach einem der vorhergehenden Ansprüche, **dadurch gekennzeichnet, dass** die Führung (22) eine ebene Fläche (23) umfasst, an der das Beckenteil (16) beim Gebrauch anliegt.

## Revendications

1. Siège auto pour enfant (21) comprenant au moins une partie assise (2), un dossier (3) qui joint ladite partie assise (2) et au moins un guidage (22) présent sur un côté de la partie assise (2), lequel siège auto pour enfant (21) est positionné sur le siège de véhicule (11) avec la partie assise (2) du siège auto pour enfant (21) orientée vers un dossier de siège de véhicule (13) durant l'utilisation, après quoi le siège auto pour enfant (21) est fixé au moyen d'une ceinture auto à trois points d'ancrage (14) comprenant une partie épaulière (15) et une partie sous-abdominale (16), qui passe au moins par-dessus ledit guidage (22), **caractérisé en ce que** le guidage (22) est orienté à un angle tel, par rapport au siège auto pour enfant (21), que la partie épaulière (15) quittera par glissement le guidage (22) lorsqu'elle est agencée le long du guidage (22) alors que la partie sous-abdominale (16) peut fermement entrer en prise avec le guidage (22) lorsqu'elle est agencée le long du guidage (22).

2. Siège auto pour enfant (21) selon la revendication 1, **caractérisé en ce que** le guidage (22) comprend un angle obtus (α) avec une surface (24) s'étendant transversalement au dossier (3).

3. Siège auto pour enfant (21) selon la revendication 2, **caractérisé en ce que** ledit angle obtus (α) est compris entre 95 et 115 degrés.

4. Siège auto pour enfant (21) selon une quelconque des revendications précédentes, **caractérisé en ce que** le guidage (22) comprendra un angle (β) de 60 à 80 degrés par rapport à l'horizontale (25) lorsque le siège auto pour enfant (21) est positionné sur une surface horizontale.

5. Siège auto pour enfant (21) selon une quelconque des revendications précédentes, **caractérisé en ce que** le siège auto pour enfant (21) est pourvu d'un tel guidage (22) de chaque côté de la partie assise (2).

6. Siège auto pour enfant (21) selon une quelconque des revendications précédentes, **caractérisé en ce que** ledit guidage (22) comprend une surface plate (23) contre laquelle la partie sous-abdominale (16) prend appui durant l'utilisation.
